(19) Europäisches Patentamt
European Patent Office
Office européen des brevets

(11) Publication number: 0 226 954
A2

(12) # EUROPEAN PATENT APPLICATION

(21) Application number: 86117223.7

(51) Int.Cl.[4]: C 08 G 61/02

(22) Date of filing: 10.12.86

(30) Priority: 16.12.85 US 809594

(43) Date of publication of application:
01.07.87 Bulletin 87/27

(84) Designated Contracting States:
AT BE CH DE ES FR GB GR IT LI LU NL SE

(71) Applicant: The B.F. GOODRICH Company
Dept. 0015 WHB-6 500 South Main Street
Akron, Ohio 44318(US)

(72) Inventor: Minchak, Robert John
11954 Woodview Blvd.
Parma Heights Ohio 44130(US)

(72) Inventor: Ware, James Thomas
160 Cornell Avenue
Elyria Ohio 44035(US)

(72) Inventor: Wootton, Gerald Vance
487 North Revere Road
Akron Ohio 44313(US)

(74) Representative: von Kreisler, Alek, Dipl.-Chem. et al,
Deichmannhaus am Hauptbahnhof
D-5000 Köln 1(DE)

(54) **Polymerization of cycloolefins with halogen-free cocatalysts.**

(57) Polymerization of a cycloolefin monomer, containing a norbornene group, to a rigid molded product is conducted in the presence of a halogen-free metathesis catalyst, a halogen-free alkylaluminum cocatalyst, and a halogen-free modifier compound selected from alkyltin oxide compounds and hindered phenols. Such polymerization can also be accomplished in absence of the alkyltin oxide compound but in presence of the hindered phenol. The monomer charge is liquid or fluid at room temperature but is initiated and polymerization is carried out at an elevated temperature of 50 to 200°C.

EP 0 226 954 A2

# POLYMERIZATION OF CYCLOOLEFINS WITH HALOGEN-FREE COCATALYSTS

## Background of the Invention

Preparing polymers of cycloolefins containing a norbornene moiety is well known. This can be done by ring-opening polymerization of the monomers in the presence of a metathesis catalyst system composed of an alkylaluminum halide cocatalyst and a tungsten or a molybdenum compound catalyst. Such polymerization is accomplished by mixing a cycloolefin, with or without other copolymerizable monomers, with a hydrocarbon solvent in a reactor, adding thereto a molecular weight modifier followed by the alkylaluminum halide cocatalyst and a tungsten or a molybdenum compound catalyst. This solution polymerization reaction is conducted at 25-100°C with stirring, and is mildly exothermic. Polymerization is completed in less than about 2 hours with the recovery of a smooth, viscous polymer cement of honey-like consistency that comprises a polymer dissolved in the solvent.

U.S. patent 4,426,502 to Minchak described bulk polymerization of cycloolefins using a modified cocatalyst with the catalyst whereby polymerization of the cycloolefin monomers can be conducted in absence of a solvent or a diluent. The alkylaluminum halide cocatalyst is modified by pre-reacting it with an alcohol or an active hydroxyl-containing compound to form an alkoxyalkylaluminum halide or an aryloxyalkylaluminum halide which is then used in the polymerization reaction. The pre-reaction can be accomplished by using oxygen, an alcohol, or a phenol. As noted at bottom of column 4 of the Minchak patent, hindered phenols do not form the

phenoxyaluminum groups and are relatively inert. The alkoxy or aryloxy group on the cocatalyst functions to inhibit the reducing power of the cocatalyst by replacing some of the alkyl groups on the aluminum thus making it possible to react cyclic olefins by means of bulk polymerization.

It is important to lower the reducing power of the cocatalyst in order to make such bulk polymerization reactions practical. When an unmodified alkylaluminum cocatalyst is used with a catalyst to polymerize a cycloolefin, the reaction is very rapid. In such systems, the polymerization is unacceptable since the active catalyst species is quickly encapsulated by polymer formed on contact between the cocatalyst, catalyst and monomer and is, therefore, not able to contact additional monomer present in the system for polymerization to continue. Modifying the cocatalyst by pre-reaction with hydroxyl-containing materials reduces the activity of the cocatalyst to the point where acceptable polymer products are produced with thermal activation. Mixing of the ingredients is accomplished by mixing the ingredients at room temperature without polymerization reaction or encapsulation.

Towards the bottom of column 5 of the Minchak patent, it is stated that to be useful in bulk polymerization, the cocatalysts must contain at least some halogen, some alkoxy or aryloxy groups, and some alkyl groups, along with aluminum. As stated therein, when the cocatalyst is a trialkylaluminum, the polymerization product is a viscous cement wherein conversion of only up to about 30% is achieved even at a temperature as high as 140°C. When the cocatalyst is aluminum trihalide or trialkoxyaluminum, very little or no

polymerization takes place. Same is true of dialkoxyaluminum halide cocatalyst, since it does not contain any alkyl group.

The electronics industry has a plethora of applications for polymers and products therefrom which contain no halogen. In solution polymerization, it is most desirable for such polymers to be produced using catalyst systems which contain no halogen, thereby avoiding costly and complex extraction or other clean-up processes to remove the undesirable halogen impurities. In bulk polymerization and related reaction injection molding (RIM) processes, wherein the catalyst residues usually remain in the finished polymer or molded product, such clean-up processes are wholly impractical, and for electronic and other applications employing such bulk-produced polymers and products requiring absence of halogen, a halogen-free catalyst/cocatalyst system is essential.

Halogen-free systems, when referred to herein, are those that are free of ionic or hydrolyzable halogens in the monomer, the catalyst, the cocatalyst, and the modifier and/or hindered phenol. The presence of a halogen in a system is undesirable since it can lead to corrosion or have other adverse electrical effects on sensitive electronic components. This invention, therefore, is directed to the use of halogen-free cocatalysts in bulk or solution polymerization of cycloolefins containing a norbornene group. In a preferred embodiment, no halogen in any form is present in the system.

Bulk polymerization, when referred to herein, is any process wherein reactive liquid formulations consisting of mixtures of monomers, catalysts, cocatalysts, modifiers, stabilizers,

fillers and other additives as desired, but containing no inert carrier solvent or other diluent fluid, are polymerized to polymeric products or are directly formed or molded into intermediate or finished materials, articles, or components thereof. This shall include the process commonly referred to in the art as reaction injection molding, or RIM, as noted above.

## Summary of the Invention

Bulk and solution polymerization of cycloolefins containing a norbornene group is carried out by means of a halogen-free catalyst system in the presence of a halogen-free modifier compound. Furthermore, polymerization of such cycloolefins can also be carried out in the presence of a halogen-free catalyst system with a hindered phenolic antioxidant in absence of the modifier compound. Products of such polymerization reactions can be thermoplastic or thermoset, hard, transparent plastics and filled and other reinforced or modified products which can be produced by reaction injection molding in a pre-heated mold or by other forming processes.

## Detailed Description of the Invention

This invention is characterized by fluid monomer systems at room temperature and high conversions to thermoplastic polymers at elevated temperature. By the use of crosslinkers, thermoset polymers can be obtained. Conversion levels exceeding 80% are desired, preferably greater than 90%, as measured Thermogravimetric Analyzer (TGA) analysis, weight loss at 400°C. An accepted criterion is rigid molded products which retain form and stiffness at temperataures of 40°C but preferably 80°C and higher.

This invention relates particularly to

halogen-free cocatalysts and modifiers which are used in conjunction with a catalyst to polymerize cycloolefins containing at least one norbornene group. The catalyst can contain a halogen or can be devoid thereof, however, in a preferred embodiment, the catalyst is halogen-free. The unique feature herein is the use of halogen-free alkylaluminum cocatalyst together with a halogen-free modifier compound in the conduct of bulk or solution polymerization of the cycloolefins in the presence of a catalyst. In another emobidment of this invention, bulk polymerization of the cycloolefins is carried out in the presence of a trialkylaluminum cocatalyst, catalyst, and a halogen-free hindered phenol. Although the hindered phenol is optional in the first system containing the modifier compound, it appears that its presence is necessary in the second system which is devoid of the modifier compound.

The first system described herein includes at least one cycloolefin monomer containing one norbornene group, a trialkylaluminum cocatalyst that is free of halogen, a modifier compound, and a catalyst selected from tungsten and molybdenum compounds. In the second system, a cycloolefin monomer containing a norbornene group can be polymerized in the presence of a trialkylaluminum cocatalyst, a hindered phenol, and a tungsten or molybdenum compound catalyst. As already stated, the second system is devoid of a modifier compound.

Contrary to the disclosure in the Minchak patent U.S. 4,426,502, the halogen-free cocatalyst can be used to polymerize norbornene-containing cycloolefins in the presence of a suitable metathesis catalyst. Such polymerizations are thermally initiated and are conducted at an elevated

temperature of about 50 to 200°C, preferably at 90 to 160°C. The system containing the catalyst and the cocatalyst is slow to react at room temperature, which means that pot life is adequate at ambient conditions. However, this reaction takes place rapidly at elevated temperatures and can be completed in less than about one-half hour, preferably in less than one-quarter hour, and more preferably in less than about 5 minutes. If polymerization is conducted by reaction injection molding, polymerization is completed and a hard molded product can be extracted in less than 5 minutes when a mold temperature in the range of 50-200°C is used. This, of course, depends on many variables, not the least of which is the thickness of the molded object.

As is well known, and which is applicable herein, the reducing power of the cocatalyst can be attenuated to provide additional time for mixing the various ingredients at room temperature before initiating the polymerization reaction at a higher temperature. To do this, an alkoxy or an aryloxy group is introduced into the alkylaluminum cocatalyst by pre-reacting the cocatalyst with oxygen, an alcohol, or a phenol before adding the cocatalyst to the system. Suitable alcohols, such as ethanol and propanol, are those which yield an alkoxy alkylaluminum cocatalyst that is soluble in the cycloolefin monomer to be polymerized. Such a reaction with an alcohol is conducted in absence of water by providing a blanket of nitrogen and by mixing the ingredients. The reaction is rapid and results in evolution of volatile hydrocarbons, such as ethane, if the cocatalyst used were triethylaluminum. The reaction goes essentially to 100% conversion.

Instead of pre-reacting the cocatalyst with an alcohol, the cocatalyst and the alcohol can be reacted in situ. Of course, the alkoxy groups are provided by alcohols, however, alkoxy or aryloxy groups can be supplied by other hydroxyl-containing materials that come in contact with the cocatalyst before or during polymerization. For instance, any ingredient in the formulation that contains hydroxyl groups can provide such groups for reaction with the cocatalyst to lower its reducing potency. Examples of such materials are certain fillers and phenolic stabilizers that have available active hydroxyl groups for reaction with the cocatalyst.

The alkyl groups in the alkoxyaluminum and the aryl groups in the aryloxyaluminum cocatalyst contain 1 to 18 carbon atoms, preferably 2 to 4. The preferred cocatalysts are the alkylaluminum compounds. The aryloxy groups are preferably derived from unhindered phenols and substituted and unsubstituted resorcinols. Especially preferred aryloxy groups are selected from phenoxy groups derived from a phenol that is unhindered at 2 and 6 positions. Specific examples of such compounds are phenol itself and derivatives of unsubstituted resorcinol where one of the two hydroxyl groups is esterified, as to a benzoate group.

Although phenolic stabilizers are given as an example of a material that may have available hydroxyl groups for reaction with the cocatalyst, it was discovered that hindered phenols do not form phenoxyaluminum groups and are relatively inert in this chemistry. Therefore, hindered phenols, which are known antioxidants, do not appear to provide the hydroxyl moiety for reaction with the cocatalyst for lowering reducing power of such cocatalysts.

The cocatalysts suitable herein are free of

halogen and are soluble in the monomer to be polymerized. Such cocatalysts are selected from alkylaluminum and alkylaluminum hydride compounds, particularly trialkylaluminum compounds containing 1 to 18, preferably 2 to 4 carbon atoms per alkyl group. The trialkylaluminum cocatalysts are pyrophoric compounds and should be kept in a monomer, such as a norbornene-containing cycloolefin. Such compounds, which are normally liquid, should be kept in an inert environment away from oxygen and moisture. The cocatalyst is preferably used as a solution of the cocatalyst in a cycloolefin, such as a 0.5 molar solution in a cycloolefin in which the cocatalyst is soluble.

The halogen-free modifier compound noted herein is used in conjunction with a halogen-free cocatalyst and a suitable metathesis catalyst to polymerize a norbornene-containing cycloolefin monomer or a mixture thereof. It is the presence of a modifier compound which makes it possible to use a halogen-free cocatalyst in conjunction with a suitable catalyst to polymerize one or more the the cycloolefins, in the presence or absence of a hindered phenol. In absence of the modifier compound and the hindered phenol, the polymerization cannot be conducted successfully to high conversion even at an elevated temperature. However, in absence of modifier compound but in presence of the hindered phenol, a useful degree of polymerization exceeding 80% conversion can be attained.

When using a modifier compound, the cocatalyst should be free of halogen. If a halogen-containing cocatalyst is used in such a system, polymerization of such cycloolefins is poor, as indicated by low conversion of less than 50%.

The modifier compound useful herein is

selected from alkyltin oxide compounds which include bis(trialkyl tin)oxides and bis(triphenyl tin)oxides of formula I and alkyalkoxy tin compounds of formula II, below:

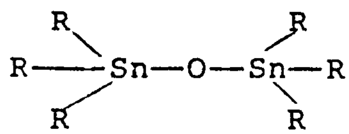

$R_x(RO)_ySn$

I II

where the R groups in formula I and II can be same or different alkyl and aryl groups of 1 to 18, preferably 2 to 8 carbon atoms in each. In formula II, the sum of x and y is 4 with y being 1 to 3, preferably 1 to 2. The preferred tin modifiers of formula I include those wherein all of the R groups are the same, such as bis(trialkyl tin)oxides and bis(triphenyl tin)oxides whereas preferred tin modifiers of formula II contain 1 to 3 of same R groups and 1 to 2 same alkoxy groups, such as tri-n-butylethoxy tin compound. Particularly preferred modifier compounds are selected from bis(trialkyl tin) oxides. The preferred bis(trialkyl tin) oxides are in the form of a liquid which can be used neat or in a monomer solution.

The modifier compound appears to work to alleviate the action of the alkylaluminum cocatalyst to provide stability at room temperature and polymerization to a high conversion at an elevated temperature.

The catalyst useful herein is selected from ring-opening metathesis catalysts. In this type of polymerization, the rings of the monomers are opened at a norbornenyl double bond to form amorphous polymers containing backbone unsaturation. The metathesis catalysts include the molybdenum and tungsten halides, particularly molybdenum pentachloride and tungsten hexachloride, or

variations thereof, used especially in solution polymerization. These catalysts are normally used in an organic medium, such as ethyl acetate and/or toluene. For solution polymerization, these catalysts are blanketed with pure, dry nitrogen since they are unstable in air and react with oxygen or moisture.

The molybdenum and tungsten halides when used as 0.1 molar solutions in the cycloolefin monomers start polymerizing the monomer even on standing at room temperature. A polymer begins to form after several hours of standing at room temperature, the polymer being in the form of an undesirable grainy mass of gelled polymer particles.

The metathesis catalyst also includes the halogen-free ammonium molybdates and tungstates described in Minchak patent 4,426,502. These catalysts, modified from the earlier version, are soluble in the monomers, can be handled at room temperature in a room environment since they are stable in the presence of air and moisture, and do not produce polymer formation. In a preferred embodiment, the ammonium molybdate and tungstate catalysts are used in a monomer solution to facilitate admixing the catalyst with the other ingredients of the polymerization system.

The ammonium or organoammonium molybdates and tungstates suitable herein as catalysts are defined as follows:

$$[R_4N]_{(2y-6x)}M_xO_y \qquad [R^1_3NH]_{(2y-6x)}M_xO_y$$

where O represents oxygen; M represents either molybdenum or tungsten; x and y represent the number of M and O atoms in the molecule based on the valence of +6 for molybdenum, +6 for tungsten, and -2 for oxygen; and the R and $R^1$ radicals can be

same or different and are selected from hydrogen, alkyl, and alkylene groups each containing from 1 to 20 carbon atoms, and cycloaliphatic groups each containing from 5 to 16 carbon atoms. All of the R and $R^1$ radicals cannot be hydrogens nor be small with respect to the number of carbon atoms since such a condition wil render the catalyst essentially insoluble in the monomers, hydrocarbons, and most organic solvents. In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the $R^1$ radicals are selected from alkyl groups each containing from 1 to 18 carbon atoms wherein the sum of carbon atoms on all of the $R^1$ radicals is from 15 to 54, more preferably from 21 to 42.

The Minchak patent 4,426,502, referred to earlier, further defines the catalysts in instances where all or some of the R and $R^1$ groups are same or different, which disclosure is incorporated as if fully set forth herein.

Specific examples of suitable organoammonium molybdates and tungstates described herein include tridodecylammonium molybdates and tungstates, methyltricaprylammonium molybdates and tungstates, tri(tridecyl) ammonium molybdates and tungstates, and the like.

The cycloolefin monomers that can be polymerized in accordance with the process described herein are norbornene-type monomers which are characterized by the presence of at least one of the following moieties identified by the formulas I, II and III, that can be substituted or unsubstituted;

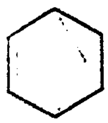

I

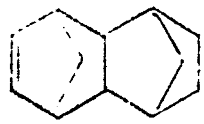

II

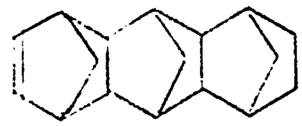

III

wherein formula I defines the norbornene monomers, formula II defines tetracyclododecene monomers, and formula III defines hexacycloheptadecene monomers. Pursuant to this definition, suitable norbornene-type monomers include substituted and unsubstituted norbornenes, dicyclopentadienes, dihydrodicyclopentadienes, trimers of cyclopentadiene, tetracyclododecenes and hexacycloheptadecenes.

Substituents on the norbornene-type monomers are selected from hydrogen, cyano, carboxy, carboxylates, alkyl and aryl groups of 1 to 20 carbon atoms, and saturated and unsaturated cyclic groups containing 3 to 12 carbon atoms which can be formed with one or more, preferably two, ring carbon atoms. In a preferred embodiment, the substituents are independently selected from hydrogen and alkyl groups of 1 to 2 carbon atoms. Generally speaking, the substituents on the norbornene-type monomers can be any which do not poison or deactivate the polymerization catalyst.

Examples of the preferred monomers referred to herein include dicyclopentadiene, methyltetracyclododecene, 2-norbornene, and other norbornene monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene. This invention especially contemplates preparation of homopolymers and copolymers of norbornene, methylnorbornene, tetracyclododecene, methyltetracyclododecene, dicyclopentadiene, and

hexacycloheptadecene. Copolymers are defined as polymers of two or more monomer.

The norbornene cycloolefins described herein also include the following compounds:

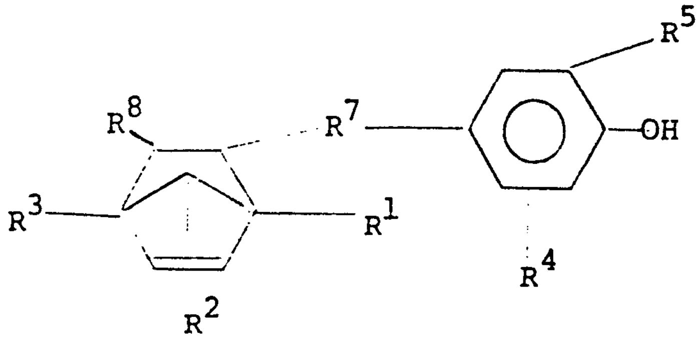

where $R^1$, $R^2$ and $R^3$ are independently selected from hydrogen and alkyl groups of 1-3 carbons, preferably hydrogen and methyl groups; $R^4$ is selected from hydrogen alkyl groups of 1-12 carbons, and substituted and unsubstituted alicyclic groups of 4-8 carbons, preferably alkyl groups of 1-6 carbons located at the open ortho position; $R^5$ is selected from alkyl groups of 1-12 carbons, and substituted and unsubstituted alicyclic groups of 4-8 carbons, preferably alkyl groups of 1-6 carbons, especially tertiary alkyl groups of 4-6 carbons; $R^7$ is selected from alkylene and alkenylene groups of 1-8 carbons, preferably 1-4 carbons; and $R^8$ is selected from hydrogen and alkyl groups of 1-8 carbons, preferably alkyl groups of 1-4 carbons. Such monomers, and preparation thereof, are disclosed in the Layer U.S. patent 4,301,306, which is incorporated as if fully set forth herein.

The norbornene cycloolefins described herein also include the following compounds.

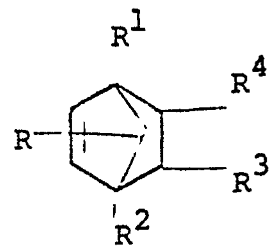

where each R, $R^1$, $R^2$, $R^3$ and $R^4$ is individually selected from hydrogen, alkyl and alkenyl groups of 1-20 carbons, and where $R^3$ and $R^4$ are joined and form an aryl group of 6-18 carbons or a cycloalkyl or a cycloolefin group of 5-6 carbons, but in a preferred embodiment, R, $R^1$ and $R^2$ are hydrogens and $R^3$ and $R^4$ are individually selected from hydrogen and alkyl or alkenyl groups of 1-5 carbons. Such monomers, and preparation thereof, are disclosed in Layer U.S. patent 4,324,717, which is incorporated as if fully set forth herein.

The monomer or mixture of the norbornene containing cycloolefin monomers can contain up to 50% by weight thereof of at least one other copolymerizable monomer. Such other copolymerizable monomers are preferably selected from mono- and dicycloolefins containing 4 to 12 carbon atoms, preferably 4 to 8 carbon atoms, examples of which include cyclobutene, cyclopentene, cyclopentadiene, cycloheptene, cyclooctene, 1,5-cyclooctadiene, cyclodecene, cyclododecene, cyclododecadiene, and cyclododecatriene. Also suitable as comonomers are bicyclic olefins containing 7 to 16 carbon atoms and 1 to 4 double bonds, preferably 8 to 12 carbon atoms and 2 to 3 double bonds. In bulk polymerization, such comonomers are preferably not used.

In solution polymerization of the cycloolefins, where toluene, cyclohexane or xylene can be used as a solvent, at least one nonconjugated acyclic olefin can be used as a molecular weight

modifier containing preferably 3 to 8 carbon atoms. Such modifiers are preferably selected from 1-olefins and 2-olefins such as 1-butene, 3-methyl-1-butene, 1-hexene, 2-pentene, 4-methyl-2-pentene, styrene, allyl benzene, and the like, which contain at least one hydrogen on each double-bonded carbon atom. The molecular weight modifier can be charged with the monomers in the ratio of 0.0001 to 1 mole thereof per 1 mole of the monomer charge.

The catalyst is employed at the level of about 0.01 to 50 millimoles, preferably 0.1 to 10 millimoles, of molybdenum or tungsten per mole of monomer charge to be polymerized. A mixture or a combination of the catalysts can be used. The preferred range is particularly applicable when the organoammonium molybdate or tungstate catalysts are used in bulk polymerization of the cycloolefins. The molar ratio of the halogen-free alkylaluminum cocatalyst to the catalyst can be in the range of 200:1 to 1:10, preferably in the range of 10:1 go 2:1. Again, the preferred range is particularly applicable to the use of organoammonium molybdate or tungstate catalyst in bulk polymerization of the monomers. The molar ratio of the modifier compound to the aluminum in the cocatalyst can be in the range of 0.1 to 3 moles, preferably 0.5 to 2 moles, and especially about 1.25 mole, all based on 1 mole of aluminum.

Other conventional additives can also be used in conjunction with polymerization of the cycloolefins by solution polymerization, bulk polymerization, or another form of polymerization. Such additives include antioxidants, fillers, impact modifiers, flamer retardants, pigments, processing aids, release agents, and the like.

Bulk polymerization of the cycloolefins can be conducted by adding a monomer or a mixture thereof to a reactor maintained at room temperature. An antioxidant, such as a hindered phenol, can be added with the monomer, to the reactor. The modifier compound, preferably a bis (trialkyl tin) oxide, can be added neat or in a monomer solution to the reactor with agitation, followed by the trialkylaluminum catalyst as a monomer solution and the organoammonium molybdate or tungstate also as a monomer. There is little or no reaction for some time at room temperature, however, on charging the reactor contents to heated mold, the reaction is initiated and is quickly completed in less than about 5 minutes. The product is a hard plastic object.

The molded products produced as described above are resistant to high temperatures and moisture, and have outstanding electrical and mechanical properties. Some particularly suitable applications are electronic products resulting from molding and other forming processes.

Sufficient degree of polymerization can be attained and molded products can be made from polymerized cycloolefins by conducting polymerization in absence of the modifier compound. This approach is characterized by the presence of not only a halogen-free catalyst and cocatalyst, described above, but also of a halogen-free hindered phenol in the polymerization of cycloolefins containing a norbornene group. The procedure, ratio of catalyst to cocatalyst and materials are the same as described above except that the modifier compound is omitted and a hindered phenol is included. Amount of the hindered phenol can vary widely from 0.0001 mole to 0.1 mole, preferably 0.001 to 0.05

mole of OH, pre mole of the monomer charge. Per one mole of aluminum in the cocatalyst, amount of the hindered phenol is about 0.1-20 moles, preferably about 1-10 moles, as hydroxyl (OH).

It is surprising that the hindered phenol has such an effect on the polymerization of cycloolefins in absence of a modifier compound. As noted above, polymerizations of cycloolefins can be conducted in the presence of a modifier compound wherein an antioxidant can be included or excluded. The antioxidants which can be used include hindered phenols, however, such polymerizations in the presence of a modifier compound are not significantly affected by the presence or absence of a hindered phenol. However, in absence of a modifier compound, the presence of a hindered phenol is essential in order to attain a sufficient degree of polymerization and a molded product with adequate properties.

Suitable hindered phenols for purposes herein include those generally defined as follows:

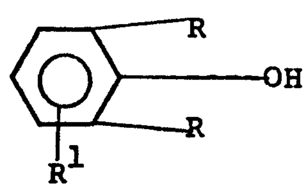

where R groups are individually selected from alkyl groups containing 1 to 6 carbon atoms, and substituted and unsubstituted alicyclic groups of 4 to 8 carbon atoms; and $R^1$, of which there can be 1 to 3 but preferably 1 to 2 such groups, is selected from hydrogen, alkyl groups containing 1 to 12, preferably 2 to 8 carbon atoms, and substituted and unsubstituted alicyclic groups of 4 to 8 carbon atoms. In a preferred embodiment, R groups are tertiary alkyl groups, particularly t-butyl groups.

There is one $R^1$ group in the preferred embodiment at the 4-position, which is selected from alkyl groups, particularly lower alkyl group, such as butyl.

The following examples demonstrate the herein-described invention wherein a halogen-free catalyst and cocatalyst are used in conjunction with a halogen-free modifier compound. In the absence of a modifier compound, polymerization can be conducted in the presence of a halogen-free catalyst and cocatalyst by using a halogen-free hindered phenol.

In the examples that follow, unless otherwise indicated, the materials are used in a particular form. The cocatalyst was triethylaluminum which is used as a 0.5 molar solution in the monomer to be polymerized. The catalyst was tetrakis [tri(tridecyl)ammonium] octamolybdate which has the structure $[(C_{13}H_{27})_3NH]_4Mo_8O_{26}$, which was used as a 0.1 molar solution in the monomer. Polydimethyl siloxane of 10 cs viscosity was used as a crazing or impact modifying agent. The antioxidant used was a phenolic hindered phenol selected from solid Ethyl 330, liquid Ethyl 744 or liquid Isonox 132. Ethyl 744 is 4-butyl-2,6-di-t-butyl-1-phenol. Isonox 132 is similar to Ethyl 744 except that Isonox 132 has a secondary butyl group at the 4-position of the phenol instead of a normal butyl group. Ethyl 330 is a high melting, commercially available hindered phenol of a complicated structure, which functions similarly to the other antioxidants. The tin modifier was bis(tri-n-butyltin)oxide, a liquid at room temperature.

Example 1

This experiment demonstrates that satisfactory polymerization of a cycloolefin is not

attained when a cycloolefin is polymerized in presence of a catalyst and a cocatalyst but in absence of a modifier compound or a hindered phenol. The cycloolefin used herein was methyl tetracyclododecene (MTD) having the following structural formula:

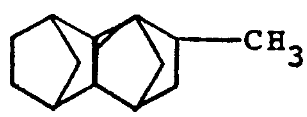

This experiment was unsuccessful and does not demonstrate the invention disclosed herein.

A reaction vessel was prepared for use by holding it in an oven for about 24 hours at 140°C, then flushing it with nitrogen, and letting it stand so it stabilized at room temperature. The following materials were useed in the amounts and in the order indicated:

50 ml MTD monomer (49.2g or 0.283 mole)
2.0 ml cocatalyst 0.5M soln in MTD
(1.0 millimole Al)
2.0 ml catalyst 0.1M soln in MTD
(.02 millimold Mo)

The MTD monomer was first charged to the reaction vessel maintained at room temperature followed by the cocatalyst solution. A yellow color developed in the monomer. The vessel was placed under a vacuum for 1 minute and then re-pressured with nitrogen. The result of this procedure was to degas the liquids and to place contents of the vessel under a blanket of nitrogen. The catalyst solution was then added to the vessel 3 minutes after the cocatalyst addition followed by evacuation for 1 minute and blanketing again with nitrogen. At this point, contents of the vessel became brown and more viscous, indicating polymerization at room

temperature.

The viscous and gel-like mixture in the reaction vessel was then transferred with difficulty to a mold preheated to 140°C. About 1 minute was required to bring the mixture to 140°C. An exotherm to about 145°C developed quickly following which, the temperature dropped to the mold temperature of 140°C. The heat on the mold was turned off and a plaque 1/8-inch (3 millimeters) in thickness was removed at mold temperature of 60°C. The plaque was soft, pliable, and had a strong odor, characteristic of the MTD monomer. Monomer conversion was under 50%. The plaque was not acceptable because it was not rigid and was odorous.

## Example 2

This example was same as Example 1 except that amount of the catalyst was doubled to see if additional catalyst would result in the desired polymerization. This experiment was also unsuccessful.

The following materials were used in the amounts and in the order indicated:

50 ml MTD monomer
2.0 ml cocatalyst soln
4.0 ml catalyst soln (0.4 mm Mo)

Essentially the same procedure was used as in Example 1, however, the mixture in the reaction vessel became too viscous and could not be transferred into the mold. This indicated that polymerization was initiated at room temperature. Instead of placing it in the mold, the mixture in the vessel was placed in an oven maintained at 140°C for about 40 minutes and then the vessel was removed. The reaction product was soft and not rigid, indicating conversion of under 50%. The reaction product was also odorous.

Example 3

This example demonstrates polymerization of MTD in the presence of the modifier compound bis(tri-n-butyltin) oxide, along with catalyst and cocatalyst. This resulted in successful polymerization whereby a rigid plaque was obtained.

The following materials were used in the amounts and in the order indicated:

50 ml MTD monomer
0.3 ml modifier (0.36g or 1.2 mm Sn)
2.0 ml cocatalyst soln
4.0 ml catalyst soln

The monomer was charged to the vessel maintained at room temperature followed by the tin modifier compound, then cocatalyst solution. After evacuating the vessel for 1 minute and replacing the vapor space with nitrogen, the catalyst solution was charged to the vessel and the vessel was again evacuated for 1 minute, and again replacing the vapor space was replaced with nitrogen. The mixture was then poured into the mold maintained at 140°C wherein it exothermed to about 147.5°C over a period of about 2 minutes. The heat was turned-off and the plaque was removed at mold temperature of about 55°C.

The plaque weighed 42.2g and was rigid and odor-free, with a conversion of about 90%, as determined by TGA analysis weight loss at 400°C. It is estimated that polymerization at the elevated temperature took less than about 10 minutes.

Example 4

This experiment demonstrates polymerization of MTD in presence of the halogen-free catalyst and the cocatalyst and also in the presence of hindered phenol antioxidant and a siloxane which acts to prevent crazing and to improve impact strength.

The following materials were used in the

amounts and in the order indicated:

50 ml MTD monomer
1.0 g Ethyl 774 antioxidant
0.05 g siloxane
0.3 ml tin modifier
2.0 ml cocatalyst soln
4.0 ml catalyst soln

Charging of the monomer to the vessel was followed by the antioxidant, siloxane, the tin modifier compound and the cocatalyst solution. After evacuating the reaction vessel for 1.5 minutes and then blanketing it with nitrogen, the catalyst solution was charged and the vessel was again evacuated for 1.5 minutes and again blanketed with nitrogen. The mixture was then poured into the mold pre-heated to 140°C where it exothermed to about 156°C before settling at the mold temperature of 140°C. A test with a probe indicated that the mixture became firm in less than 5 minutes after being transferred to the mold. After turning off the heat on the mold, the mold temperature dropped.

A rigid plaque was removed from the mold at 60°C weighing 44.5g. Conversion in this experiment was 90%.

## Example 5

This example demonstrates polymerization of the MTD monomer by the same procedure using the same materials as in Example 4 except that in this experiment, the tin modifier compound was omitted. This was a successful experiment because the hindered phenol was used, producing a ridig plaque with a conversion of 83%.

The following materials were used in the amounts and the order indicated:

50 mls MTD monomer
1.5 g Ethyl 774 antioxidant

0.05 g siloxane
2.0 ml cocatalyst soln
4.0 ml catalyst soln

The monomer was first charged to the vessel maintained at room temperature followed by the other ingredients and the cocatalyst solution. The vessel was evacuated for 1.5 minutes to degas the mixture and then blanketed with nitrogen, and then, the catalyst solution was charged to the vessel. Since there appeared to be rapid polymerization taking place at room temperature in the vessel, there was no time for the evacuation step. Therefore, the mixture was poured into the mold preheated to 140°C where it exothermed 25°C to 165°C. The heat was turned off and a rigid plaque was removed from the mold weighing 40.9 grams. TGA weight loss analysis at 400°C indicated conversion of 83%. It appears that the mixture solidified in the mold in less than about 5 minutes.

## Example 6

This example demonstrates the high conversion of the monomer which was achieved by the use of a greater amount of the catalyst than in Example 4.

The following materials were used in the amounts and in the order indicated:

50 ml MTD monomer
1.8 g Ethyl 744 antioxidant
0.05 g siloxane
0.4 ml tin modifier
2.4 ml cocatalyst soln
0.5 ml catalyst soln, 1M in MTD

Using the same procedure as in previous examples, the mix was charged into a mold preheated to 140°C. Shortly, an exotherm developed to 167°C and polymerization was completed when temperature

dropped. A firm plaque was formed in less than 2 minutes from charging of the mix to the mold. A high conversion of 94% was attained.

Example 7

This experiment demonstrates the inactivity of the catalyst employed in Example 5 when the cocatalyst used is an alkoxyaluminum alkyl chloride formed in situ by the reaction of 1-propanol with diethylaluminum chloride. This example does not demonstrate the invention herein.

The following materials were used in amounts and in the order indicated:

25 ml MTD monomer
0.42 g Isonox 132 antioxidant
0.25 ml 1-propanol 0.5 M soln in MTD
0.12 ml tin modifier
0.5 ml diethylaluminum chloride 0.5M soln in MTD
0.5 ml catalyst soln

The propanol solution contained 0.125 millimole of 1-propanol and was used to modify the cocatalyst in order to make it less reactive and controllable at room temperature. The ingredients were added to a reaction vessel maintained at room temperature in the order given above. After all ingredients were added, the vessel was then placed into an oven maintained at 140°C. After 11 minutes in the oven, the vessel was removed but it appeared that nothing happened. Normally, in absence of the tin compound, the monomer would have completely reacted after thermal activation.

Example 8

This experiment demonstrates behavior of the MTD monomer in the presence of the same system as in Example 7 except that the alcohol was excluded. The experiment turned out to be

unsuccessful.

Materials, charge order and amounts were identical to Example 7 except with the omission of 1-propanol. After 20 minutes in the 140°C oven, the mix remained fluid or at a low monomer conversion. After the mix was held overnight at 140°C, it still contained a soft-layer with a partly rigid portion.

Example 9

This example demonstrates solution polymerization using the catalyst system and the modifier described herein.

The following materials were used in the amounts and in the order indicated:

50 ml MTD monomer
300 ml xylene solvent
80.0 millimoles 1-hexene
0.36 ml tin modifier (1.5 mm Sn)
2.5 ml cocatalyst soln, 0.5M in xylene (1.25 mm Al)
2.5 ml catalyst soln, 0.1M in cyclohexane (0.25 mm M.)

The above components were added to a reactor at room temperature. The reaction self-initiated and proceeded to completion in about 1 hour at 140°C. The product in the reactor was a smooth polymer cement which was recovered by precipitation with isopropyl alcohol, and then it was dried. The dried product was a solid thermoplastic resin with a Tg of about 200°C. The resin had no gel in toluene, had inherent viscosity in toluene of 0.50, and was soluble in hydrocarbon solvents.

Another polymerization run was made, as described above, but in absence of the 1-hexene molecular weight modifier. Reaction product in this instance was a gelled mixture that was of a

consistency of jello containing about 50% gel. The soluble portion of the gelled mixture had DSV of 2.0. The gel was insoluble, of course, which is undesirable for apparent reasons.

Example 10

This experiment was carried out to show that an alkylalkoxy tin modifier was effective in yielding polymerized monomer. The modifier used herein was tri-n-butylethoxy tin which has one ethoxy group and three n-butyl groups separately bonded to tin.

The following materials were used in the amounts and in the order indicated:

50 ml MTD monomer
1.0 g Ethyl 744 antioxidant
0.05g siloxane
0.25 ml tin modifier (0.75 mm Sn)
2.4 ml cocatalyst soln (0.54M in MTD, 1.3 mm Al)
0.5 ml catalyst soln

Using the same procedure as in the above experiments, the above ingredients were added to a mold preheated to 140°C. Within one minute of charging the mold, an exotherm developed raising temperature to 163°C and within two minutes of charging the mold, a rigid plaque was formed. Heat on the mold was maintained for 10 minutes and then it was shut-off. A rigid plaque was removed from the mold when the mold temperature dropped to about 60°C. Conversion of the monomer in this experiment was 89.4%.

Example 11

This experiment was a duplicate of Example 10 but carried out by omitting the hindered phenolic antioxidant and the siloxane.

The procedure was the same as in Example

10. The exotherm reached 155°C. A solid, rigid plaque was obtained which had 83% monomer conversion, as determined by TGA analysis.

Claims

1. Process comprising the step of polymerizing a monomer charge which contains at least one cycloolefin monomer containing a norbornene group in the presence of a metathesis catalyst, a halogen-free cocatalyst, and a halogen-free modifier compound selected from alkyltin oxides and mixtures thereof.

2. Process of claim 1 wherein said catalyst is halogen-free and is selected from molybdenum compounds, tungsten compounds, and mixtures thereof; said cocatalyst is selected from alkylaluminum and alkylaluminum hydride compounds; and said cycloolefin monomer contains one of the following substituted and unsubstituted moieties identified by formulas I, II and III:

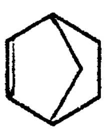
I

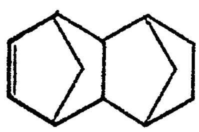
II

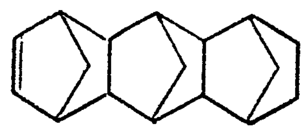
III

amount of said catalyst being 0.01 to 50 millimoles molybdenum or tungsten per mole of said cycloolefin monomer; the molar ratio of said cocatalyst as aluminum to said catalyst as molybdenum or tungsten is in the range of about 200:1 to 1:10; and the molar ratio of said modifier compound to aluminum is in the range of about 0.1 to 3 moles per mole of aluminum.

3. Process of claim 2 wherein substituents on said cycloolefin monomer are independently selected from hydrogen, cyano, carboxyl, carboxylate, alkyl and aryl groups of 1-20 carbons, and saturated and unsaturated cyclic groups of 3-12 carbons which can be formed with one or more of the ring carbons; and wherein said catalyst is defined

by the following formulas I and II:

$[R_4N]_{(2y-6x)}M_xO_y$ (I) $\quad$ $[R^1_3NH]_{(2y-6x)}M_xO_y$ (II)

where each R and $R^1$ group is independently selected from hydrogen, alkyl and alkylene groups each containing 1 to 20 carbon atoms, and cycloaliphatic groups each containing 5 to 16 carbon atoms, the sum of all carbon atoms represented by said R groups is 20 to 72 and the sum of all carbon atoms represented by said $R^1$ groups is 15 to 54, M is selected from molybdenum (VI) and tungsten (VI), and x and y represent the number of M and O atoms in the molecule; and wherein said cocatalyst is selected from trialkylaluminum compounds with each alkyl group independently selected from alkyl groups containing 1 to 18 carbon atoms; and wherein said modifier compound is selected from trialkyltin oxides with each alkyl group independently selected from alkyl groups containing 1 to 18 carbon atoms.

4. Process of claim 3 wherein said cocatalyst is selected from trialkylaluminum compounds wherein each alkyl group contains 2 to 4 carbon atoms and wherein said modifier compound is selected from bis(trialkyl tin)oxides and bis(triphenyl tin)oxides of formula I and alkylalkoxy tin compounds of formula II, below:

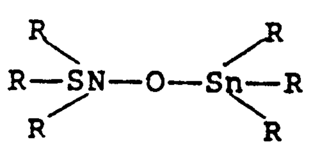

$R_x(RO)_ySn$

I

II

where each R group in formulas I and II can be same or different and is selected from alkyl groups and aryl groups of 1 to 18 carbon atoms, and where the sum of x and y is 4, with y being 1 to 3.

5. Process of claim 4 wherein said modifier compound is selected from bis(trialkyl

tin)oxides wherein said alkyl groups have 2 to 8 carbon atoms, and wherein the molar ratio of said modifier compound to aluminum of said cocatalyst is 0.5 to 2 moles of tin per 1 mole of aluminum.

6. Process of claim 5 including 0.001 to 0.05 mole of a hindered phenol per one mole of said cycloolefin monomer, said hindered phenol is defined as follows:

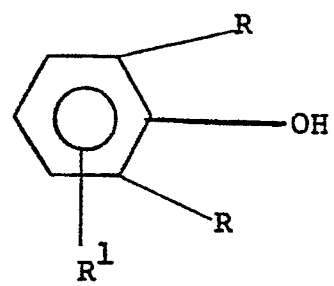

where each R is individually selected from alkyl groups containing 1 to 6 carbon atoms and substituted alicyclic groups of 4 to 8 carbon atoms, and $R^1$ is selected from hydrogen, alkyl groups of 1 to 12 carbon atoms, and substituted and unsubstituted alicyclic groups of 4 to 8 carbon atoms; and wherein substituents on said cycloolefin monomer are independently selected from hydrogen and alkyl groups of 1 to 2 carbon atoms; and wherein conversion of at least 80% is atained in less than 10 minutes after raising the cycloolefin monomer to a temperature of 50 to 200°C.

7. Process of claim 5 wherein said cocatalyst is triethylaluminum in a solution of said cycloolefin monomer, said catalyst is tetrakis[tri(tridecyl)ammonium] octamolybdate in solution of said cycloolefin monomer, said modifier compound is bis(tri-n-butyltin)oxide, said catalyst is used in amount of 0.1 to 10 millimoles thereof per mole of said cycloolefin monomer and said modifier compound is used in amount of 1 to 1.3

moles thereof per one mole of aluminum in said cocatalyst.

8. Process of claim 5 comprising the steps of conveying a reactive liquid charge which is liquid at room temperature, or ingredients thereof, alone or together with other ingredients, into a mold maintained at a temperature of 50 to 200°C wherein said polymerization takes place in bulk by ring opening of said cycloolefin monomer, and extracting a rigid molded product from said mold in less than about 10 minutes after conveying said charge into said mold, said liquid charge comprising said cycloolefin monomer, said catalyst, said cocatalyst, and said modifier compound.

9. Process of claim 6 wherein polymerization is conducted in absence of said modifier compound, said process comprising the steps of conveying a reactive liquid charge which is liquid at room temperature, or ingredients thereof alone or together with other ingredients, into a mold maintained at a temperature of 50 to 200°C wherein said polymerization takes place in bulk by ring opening of said cycloolefin monomer, and extracting a rigid molded product from said mold in less than 10 minutes after conveying said charge into said mold, said liquid charge or ingredients thereof comprising said cycloolefin monomer, said catalyst, said cocatalyst, and said hindered phenol.

10. Process of claim 9 wherein said catalyst is tetrakis[tri(tridecyl)ammonium] molybdate; said cocatalyst is triethylaluminum; said hindered phenol is selected from phenols wherein the R groups at the 2-position and the 6-position are selected from tertiary alkyl groups of 4-6 carbons and the $R^1$ group selected from lower alkyl groups and is at the 4-position; and said catalyst is used

in amount of 1 to 10 millimoles thereof per mole of said cycloolefin monomer.

11. Process of claim 7 wherein said cycloolefin monomer is selected from norbornene, methylnorbornene, tetracyclododecene, methyltetracyclododecene, dicyclopentadiene, hexacycloheptadecene, and mixtures thereof.

12. Process of claim 11 wherein said monomer charge contains up to about 50% by weight thereof of one or more of other polymerizable comonomers in addition to said cycloolefin monomer.

13. Product comprising a polymerization reaction product of a monomer charge containing at least one cycloolefin monomer containing a norbornene group prepared in the presence of a metathesis catalyst, a halogen-free cocatalyst and a modifier compound selected from alkyltin oxides and mixtures thereof.

14. Product of claim 13 wherein said catalyst is selected from molybdenum compounds, tungsten compounds, and mixtures thereof; said cocatalyst is selected from alkylaluminum and alkyl aluminum hydride compounds; and wherein said cycloolefin monomer, contains one of the following substituted or unsubstituted moieties identified by formulas I, II and III:

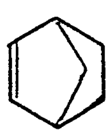
I

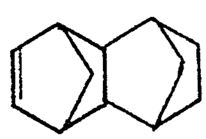
II

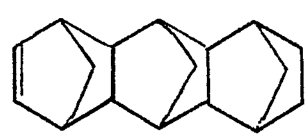
III

amount of said catalyst being 0.01 to 50 millimoles molybdenum or tungsten per mole of said cycloolefin monomer; the molar ratio of said cocatalyst as aluminum to said catalyst as molybdenum or tungsten is in the range of about 200:1 to 1:10; and the

molar ratio of said modifier compound to aluminum is in the range of about 0.1 to 3 moles per mole of aluminum.

15. Product of claim 14 wherein said catalyst is defined by the following formulas I and II:

$[R_4N]_{(2y-6x)}M_xO_y$ (I) $[R^1_3NH]_{(2y-6x)}M_xO_y$ (II)

where each R and $R^1$ group is independently selected from hydrogen, alkyl and alkylene groups each containing 1 to 20 carbon atoms, and cycloaliphatic groups each containing 5 to 16 carbon atoms, the sum of all carbon atoms represented by said R groups is 20 to 72 and the sum of all carbon atoms represented by said $R^1$ groups is 15 to 54; M is selected from molybdenum (VI) and tungsten (VI); and x and y represent the number of M and O atoms in the molecule.

16. Product of claim 15 wherein said cocatalyst is selected from trialkylaluminum compounds wherein each alkyl group contains 2 to 4 carbon atoms and wherein said modifier compound is selected from bis(trialkyl tin)oxides and bis(triphenyl tin) oxides of formula I and alkylalkoxy tin compounds of formula II, below:

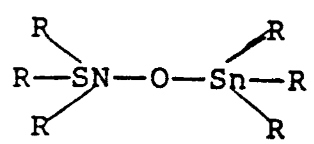

$R_x(RO)_ySn$

I II

where each R group in formulas I and II can be same or different and is selected from alkyl groups and aryl groups of 1 to 18 carbon atoms, and where the sum of x and y is 4, with y being 1 to 3.

17. Product of claim 16 including 0.0001 to 0.1 mole of a hindered phenol per one mole of said cycloolefin monomer, said hindered phenol is

defined as follows:

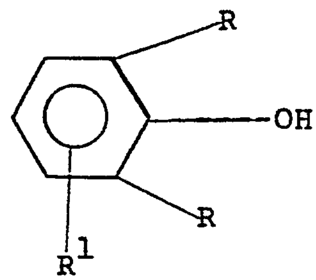

where each R is individually selected from alkyl groups containing 1 to 6 carbon atoms and substituted and unsubstituted alicyclic groups of 4 to 8 carbon atoms; and $R^1$ is selected from hydrogen, alkyl groups of 1 to 12 carbon atoms, and substituted and unsubstituted alicyclic groups of 4 to 8 carbon atoms.

18. Product of claim 17 wherein said cocatalyst is triethylaluminum in a solution of said cycloolefin monomer, said catalyst is tetrakis[tri(tridecyl)ammonium] octamolybdate in solution of said cycloolefin monomer, said modifier compound is bis(tri-n-butyltin)oxide, said catalyst is used in amount of 0.1 to 10 millimoles thereof per mole of said cycloolefin monomer and said modifier compound is used in amount of 1 to 1.3 moles thereof per one mole of aluminum in said cocatalyst.

19. Product of claim 18 which is devoid of said modifier compound but which is prepared in the presence of a hindered phenol defined as follows:

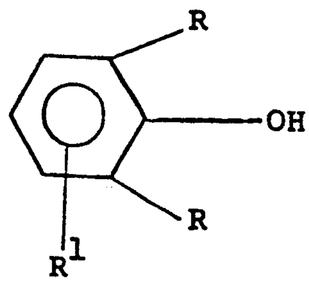

where each R is selected from alkyl groups containing 1 to 6 carbon atoms and substituted and unsubstituted alicyclic groups of 4 to 8 carbon atoms; and $R^1$ is selected from hydrogen, alkyl groups of 1 to 12 carbon atoms, and substituted and unsubstituted alicyclic groups of 4 to 8 carbon atoms.

20. Product of claim 19 wherein amount of said hindered phenol is 0.001 to 0.05 mole thereof per mole of said monomer in said first and second mixtures, R groups of said hindered phenol are individually selected from tertiary alkyl groups and $R^1$ group of said hindered phenol is located at the 4-position and is selected from lower alkyl groups; and wherein said monomer charge contains up to about 50% by weight thereof of one or more of other polymerizable comonomers in addition to said cycloolefin monomer; and wherein said cycloolefin monomer is selected from norbornene, methylnorbornene, tetracyclododecene, methyltetracyclododecene, dicyclopentadiene, hexacycloheptadecene, and mixtures thereof.

21. Polymerization system comprising a first mixture and a separate second mixture, said first mixture comprising at least one cycloolefin monomer containing a norbornene group, a halogen-free cocatalyst selected from alkylaluminum and alkylaluminum hydride compounds, and effective

amount of a halogen-free additive selected from modifier compounds selected from alkyl tin oxides, hindered phenols, and mixtures thereof; said second mixture comprising at least one cycloolefin monomer containing a norbornene group and a metathesis catalyst selected from halogen-free molybdenum compounds and tungsten compounds; amount of said catalyst is 0.01 to 50 millimoles molybdenum or tungsten per mole of said monomer in both said first and said second mixtures, the molar ratio of said cocatalyst as aluminum to said catalyst as molybdenum or tungsten is in the range of 200:1 to 1:10, and the molar ratio of said modifier compound said cocatalyst as aluminum is in the range of 0.1 to 3 moles thereof per mole of aluminum.

22. Polymerization system of claim 21 wherein amount of said hindered phenol is 0.0001 to 0.1 mole thereof per mole of said monomer in said first and second mixtures, said hindered phenol is defined as follows:

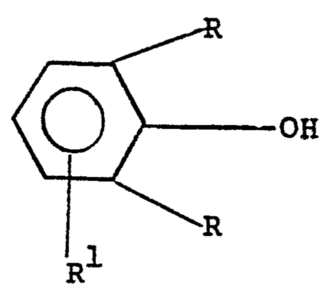

where each R is selected from alkyl groups containing 1 to 6 carbon atoms and substituted and unsubstituted alicyclic groups of 4 to 8 carbon atoms; and $R^1$ is selected from hydrogen, alkyl groups of 1 to 12 carbon atoms, and substituted and unsubstituted alicyclic groups of 4 to 8 carbon atoms and wherein substituents on said cycloolefin monomer are independently selected from hydrogen,

cyano, carboxyl, carboxylate, alkyl and aryl groups of 1-20 carbons, and saturated and unsaturated cyclic groups of 3-12 carbons which can be formed with one or more of the ring carbons; and wherein said catalyst is defined by the following formulas I and II:

$[R_4N]_{(2y-6x)}M_xO_y$ (I) $[R^1_3NH]_{(2y-6x)}M_xO_y$ (II)

where each R and $R^1$ group is independently selected from hydrogen, alkyl and alkylene groups each containing 1 to 20 carbon atoms, and cycloaliphatic groups each containing 5 to 16 carbon atoms, the sum of all carbon atoms represented by said R groups is 20 to 72 and the sum of all carbon atoms represented by said $R^1$ groups is 15 to 54, M is selected from molybdenum (VI) and tungsten (VI), and x and y represent the number of M and O atoms in the molecule; and wherein said cocatalyst is selected from trialkylaluminum compounds with each alkyl group independently selected from alkyl groups containing 1 to 18 carbon atoms; and wherein said modifier compound is selected from trialkyltin oxides with each alkyl group independently selected from alkyl groups containing 1 to 18 carbon atoms.

23. Polymerization system of claim 22 wherein wherein said cocatalyst is selected from trialkylaluminum compounds wherein each alkyl group contains 2 to 4 carbon atoms and wherein said modifier compound is selected from bis(trialkyl tin)oxides and bis(triphenyl tin)oxides of formula I and alkylalkoxy tin compounds of formula II, below:

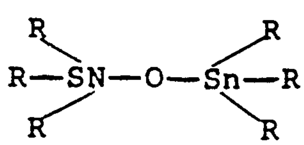

$R_x(RO)_ySn$

I II

where each R group in formulas I and II can be same

or different and is selected from alkyl groups and aryl groups of 1 to 18 carbon atoms, and where the sum of x and y is 4, with y being 1 to 3.

24. Polymerization system of claim 23 wherein said modifier compound is selected from bis(trialkyl tin)oxides wherein said alkyl groups have 2 to 8 carbon atoms, and wherein the molar ratio of said modifier compound to aluminum of said cocatalyst is 0.5 to 2 moles of tin per 1 mole of aluminum.

25. Polymerization system of claim 21 including in said first mixture 0.001 to 0.05 mole of a hindered phenol per one mole of said cycloolefin monomer in said first and second mixtures, said hindered phenol is defined as follows:

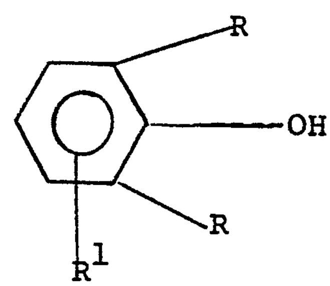

where each R is individually selected from alkyl groups containing 1 to 6 carbon atoms and substituted alicyclic groups of 4 to 8 carbon atoms, and $R^1$ is selected from hydrogen, alkyl groups of 1 to 12 carbon atoms, and substituted and unsubstituted alicyclic groups of 4 to 8 carbon atoms; and wherein substituents on said cycloolefin monomer are independently selected from hydrogen and alkyl groups of 1 to 2 carbon atoms; and wherein conversion of at least 80% is atained in less than 10 minutes after raising the cycloolefin monomer to a temperature of 50 to 200°C.

26. Polymerization system of claim 25 wherein said additive is selected from hindered

phenols and mixtures thereof, amount of said hindered phenol is 0.001 to 0.05 mole per mole of said monomer in said first and second mixtures, R groups of said hindered phenol are individually selected from tertiary alkyl groups and $R^1$ group of said hindered phenol is located at the 4-position and is selected from lower alkyl groups.

27. Catalyst system comprising a halogen-free metathesis catalyst, a halogen-free metathesis cocatalyst, and a halogen-free additive selected from alkyl tin oxides, hindered phenols, and mixtures thereof.

28. Catalyst system of claim 1 wherein said catalyst is selected from molybdenum compounds, tungsten compounds, and mixtures thereof; and said cocatalyst is selected from alkylaluminum and alkylaluminum hydride compounds, and mixtures thereof; the molar ratio of said cocatalyst as aluminum to said catalyst as molybdenum or tungsten is in the range of about 200:1 to 1:10, the amount of said alkyltin oxide to said aluminum in said cocatalyst is in the range of about 0.1 to 3 moles tin per mole of said aluminum, and the amount of said hindered phenol is about 0.1-20 moles as OH per mole of said aluminum.

29. Catalyst system of claim 28 wherein said catalyst is defined by the following formulas I and II:

$$[R_4N]_{(2y-6x)}M_xO_y \quad (I) \qquad [R^1_3NH]_{(2y-6x)}M_xO_y \quad (II)$$

where each R and $R^1$ group is independently selected from hydrogen, alkyl and alkylene groups each containing 1 to 20 carbon atoms, and cycloaliphatic groups each containing 5 to 16 carbon atoms, the sum of all carbon atoms represented by said R groups is 20 to 72 and the sum of all carbon

atoms represented by said $R^1$ groups is 15 to 54, M is selected from molybdenum (VI) and tungsten (VI), and x and y represent the number of M and O atoms in the molecule; and wherein said cocatalyst is selected from trialkylaluminum compounds with each alkyl group independently selected from alkyl groups containing 1 to 18 carbon atoms; and wherein said modifier compound is selected from trialkyltin oxides with each alkyl group independently selected from alkyl groups containing 1 to 18 carbon atoms.

30. Catalyst system of claim 29 wherein said cocatalyst is selected from trialkylaluminum compounds wherein each alkyl group contains 2 to 4 carbon atoms and wherein said modifier compound is selected from bis(trialkyl tin)oxides and bis(triphenyl tin)oxides of formula I and alkylalkoxy tin compounds of formula II, below:

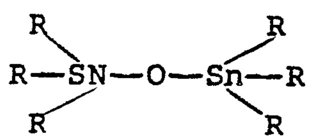

I

$R_x(RO)_ySn$

II

where each R group in formulas I and II can be same or different and is selected from alkyl groups and aryl groups of 1 to 18 carbon atoms, and where the sum of x and y is 4, with y being 1 to 3; and wherein said hindered phenol is defined as follows:

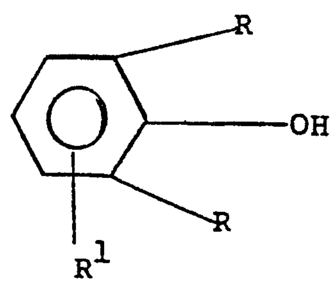

where each R is individually selected from alkyl groups containing 1 to 6 carbon atoms and substituted alicyclic groups of 4 to 8 carbon atoms,

and $R^1$ is selected from hydrogen, alkyl groups of 1 to 12 carbon atoms, and substituted and unsubstituted alicyclic groups of 4 to 8 carbon atoms; and wherein substituents on said cycloolefin monomer are independently selected from hydrogen and alkyl groups of 1 to 2 carbon atoms; and wherein conversion of at least 80% is atained in less than 10 minutes after raising the cycloolefin monomer to a temperature of 50 to 200°C.

31. Catalyst system of claim 30 wherein said catalyst is tetrakis[tri(tridecyl) ammonium] molybdate; said cocatalyst is triethylaluminum; said alkyl tin oxide is bis(tri-n-butyl tin) oxide; and said hindered phenol has R groups at the 2-position and at the 6-position which are independently selected from tertiary alkyl groups of 4-6 carbons and the R' group is at the 4-position and is selected from lower alkyl groups; the molar ratio of said cocatalyst as aluminum to said catalyst as molybdenum is in the range about 10:1 to 2:1, the amount of said alkyl tin oxide to said aluminum in said cocatalyst is in the range of about 0.5 to 2 moles of tin per mole of said aluminum, and the amount of said hindered phenol is about 1-10 moles as OH per mole of said aluminum.